(19) **Europäisches Patentamt**

**European Patent Office**

**Office européen des brevets**

(11) **EP 0 548 932 B1**

(12) **EUROPEAN PATENT SPECIFICATION**

(45) Date of publication and mention
of the grant of the patent:
**05.06.1996 Bulletin 1996/23**

(51) Int. Cl.⁶: **B23H 1/00**, B23H 1/08,
B23H 1/02

(21) Application number: **92121827.7**

(22) Date of filing: **22.12.1992**

(54) **Surface layer forming process using electric discharge machining**

Verfahren zur Herstellung einer Oberflächenschicht durch elektrische Entladungen

Procédé pour obtenir une couche superficielle par décharges électriques

(84) Designated Contracting States:
**CH DE LI**

(30) Priority: **25.12.1991 JP 357138/91**

(43) Date of publication of application:
**30.06.1993 Bulletin 1993/26**

(73) Proprietors:
• **MITSUBISHI DENKI KABUSHIKI KAISHA**
**Tokyo 100 (JP)**
• **Mohri, Naotake**
**Nagoya-shi, Aichi 468 (JP)**

(72) Inventors:
• **Saito, Nagao,**
**c/o Mitsubishi Denki K.K.**
**Chiyoda-ku, Tokyo 100 (JP)**

• **Magara, Takuji,**
**c/o Mitsubishi Denki K.K.**
**Higashi-ku, Nagoya-shi, Aichi 461 (JP)**
• **Mohri, Naotake**
**Nagoya-shi, Aichi 468 (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
WO-A-80/00669          GB-A- 1 121 923
US-A- 3 509 305        US-A- 4 443 682

## Description

The present invention relates to a method for forming a surface of a workpiece comprising the steps supplying a pulsed main voltage to a machining gap formed by the workpiece and an electrode, superposing a high voltage on the pulsed main voltage to generate an electric spark discharge in the machining gap and providing a dielectric mixture including a metallic or a submetallic powder in the machining gap. Particularly, the invention relates to a method for forming a surface layer by electric discharge machining, which provides a finely-machined surface and improves the resistance of the surface to corrosion and wear by promoting discharge dispersion at the surface of a workpiece material and conducting surface treatment of the workpiece during the electric discharge machining process.

Further, the present invention relates to an electric discharge machining apparatus comprising an electrode, a tank with a dielectric mixture that includes a metallic or a submetallic powder, a power source with a main power supply circuit for supplying a pulsed main voltage to a machining gap formed between the electrode and the workpiece and a high voltage superposition circuit for superposing a high voltage on the pulsed main voltage and a first limiting resistor connected between the main power supply and the electrode and a second limiting resistor connected between the high voltage superpositioned circuit and the electrode.

From the Published Unexamined Japanese Patent Application No. 24916/1987 a method is known for electric discharge machining which uses an electrode formed of a submetal material (i.e., a semiconductive material), such as silicon. During EDM, the submetal electrode forms a solid surface layer that is not susceptible to aqua regia and is difficult to damage, e.g., it is not spillable or easily cracked when subjected to several tons of force. This known process employs an ordinary electric discharge machining system with a submetal electrode, conducting machining on a workpiece made of SUS 304 (18Cr-8Ni stainless steel), 13Cr steel or high-speed steel. A highly corrosion-resistant surface is formed on the surface of the SUS304, 13Cr steel or high-speed steel by carrying out such machining for several minutes to several hours.

Further, a mixture of metallic or submetallic (semiconductor) powder having average grain size 20 to 40 $\mu$m is added into a machining fluid with the particles of 20 g per liter to improve the stability of discharge. Moreover, the degree to which the mixture enhances the mechanical properties (e.g., corrosion resistance and wear resistance) of the electrode and workpiece surfaces depends on the material being mixed in. It is thus possible to employ the electric discharge machining process for the surface treatment of metal, in addition to its conventional use in metal removal. The type of powder material used is for example, a semiconductor material such as silicon.

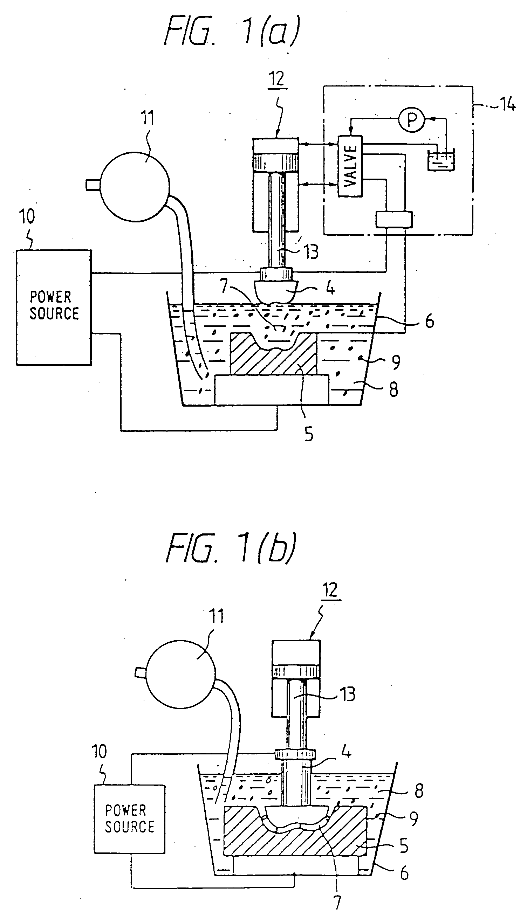

The operation of a conventional electric discharge machining apparatus will be described with reference to Figs. 1(a) and 1(b). Fig. 1(a) shows the apparatus in a non-machining mode and Fig. 1(b) shows the apparatus in a machining mode. As shown, an electrode 4 and a workpiece 5 are positioned in a machining tank 6, with the workpiece 5 are positioned in a machining tank 6, with the workpiece 5 and the electrode 4 forming a machining gap 7. A dielectric machining fluid 8 in the machining tank 6 includes a silicon powder 9. A power supply unit 10 is used for supplying machina energy to the machining gap 7, and a pneumatic pump 11 is used for agitating the dielectric machining fluid 8 by feeding air into the machining tank 6. A hydraulic cylinder device 12 is used for vertically moving the electrode 4 toward and away from the workpiece 5, with a piston rod 13, and a servo unit 14 is used for controlling the hydraulic cylinder device 12.

As mentioned above, in the apparatus thus constructed, the machining solution is mixed with the silicon particles 9 having an average grain size of approximately 20 to 40 $\mu$m with a silicon particle mixture ratio of approximately 20 gr/$\ell$ of machining solution. The pump 11 supplies air to agitate the machining solution 6, thereby preventing the deposition of the silicon particles. As shown in Fig. 1(a) and Fig. 1(b), the electrode is automatically intermittently moved up and down, so that the decomposition from the machining solution and the sludge, which are formed by electric discharge, are not accumulated in the discharge gap 7 (i.e., they are diffused therein). The air pump 11 may be replaced with a machining solution circulating pump. The electrode is formed of copper and graphite.

In general, a high-voltage superposition circuit is employed as the machining power supply. As the voltage of the high-voltage superposition circuit becomes larger, cracking and/or pitting occur less in the workpiece surface. Further, if silicon powder is present in the machining gap, an electrical spark is generated more easily over a longer machining gap distance, even if the applied voltage remains constant. However, applying a higher voltage will further stabilize machining. The corrosion and wear resistance of a workpiece machined in such a manner improves considerably.

The superposition of a voltage of approximately 100 to 400 V has been shown to stabilize machining and suppress occurrence of cracking and pitting. This leads to a considerable improvement in corrosion resistance and wear resistance. Moreover, surface roughness is also reduced. However, the powder material breaks down during discharge operations and will usually reach its life expectancy after about 100 to 200 hours of use.

In addition, while the mixture of the powder suppresses cracking and pitting, enhances corrosion and wear resistance, and reduces surface roughness, these effects are not consistently reproducible under any given machining condition. Specifically experiments have shown that the mixture of the powder enhances the above noted effects by a greater amount when the applied voltage is low. The effects decrease abruptly when the voltage moves beyond a certain applied voltage. More specifically, the surface roughness increases greatly as the applied voltage increases.

US-A-4 443 682 discloses a circuit for providing electrical discharge machining current pulses across an electrical discharge machining gap having two terminals comprising a first MOSFET having power conducting terminals connected between a gap terminal and a DC power supply terminal, said first MOSFET further having its gate contacted to a source of variable amplitude pulse signals for selectively varying the slope of the rising edge of the machining current pulses, a second MOSFET having its power conducting terminals connected with like polarity to the first MOSFET between said gap terminal and a terminal of a second DC power supply of a greater voltage magnitude than the first mentioned power supply, said second MOSFET having its gate connected to a source of spike signals, and means for conjointly operating both said sources.

Here, a specific range for a current flowing in the machining gap during the application of a high voltage pulse is not specified.

WO 80/00669 discloses the use of a suspension of particles of at least one conductive solid material in a liquid dielectric substance as dielectric liquid for electroerosion machining, while the question how to determine the ranges for a high voltage applied to a machining gap and a corresponding current is not dealt with in this document.

Further technological background with respect to the present invention is described in GB-A-1 121 923 wherein an electrical discharge machining apparatus is described that can be utilized both to machine a workpiece and to facilitate the hardening thereof. To this end, the processing of the workpiece is interrupted to apply a layer of a surface-adhering substance. Also, to increase the speed at which material is removed from a workpiece in US-A-3 509 305 a random gap pulsing method is proposed.

The object of the invention is to provide a surface layer forming method using electric discharge machining techniques which reduce surface roughness sharply and maintain consistent machining characteristics for a longer period of time, while maintaining the machining stability and capability.

This object is achieved with a method for forming a surface of a workpiece wherein a machining gap distance is increased to an extent at a circulation of the dielectric mixture in the machining gap is facilitated, the pulsed main voltage is supplied through a main power source, whereby a first limiting resister is used to determine together with a capacitance of the machining gap of a discharge duration of the pulsed main voltage and the high voltage between 100 V and 400 V is superposed by a high voltage superposition circuit to the pulsed main voltage, whereby a second limiting resistor in the range of 100 $\Omega$ to 300 $\Omega$ is used to maintain a pulsed discharge current from the high voltage superposition circuit of essentially 1.5 A.

Further, the object is achieved with an electric discharge machining apparatus of the type outlined above wherein the limiting resistor has the resistance value between 10 to 20 $\Omega$ and determines together with a capacitance of the maintaining gap a discharge duration of the post mean voltage and the second limiting resistor has a resistance value between 100 $\Omega$ and 300 $\Omega$ and limits the current flow from the high voltage superposition circuit that supplies a high voltage between 100 V and 400 V to essentially 1.5 A.

The inventive method and the inventive apparatus allow to enhance the effects of powder mixture, to reduce the surface roughness and further to maintain constant machining characteristics for a longer period of time while the machining of the machining stability and capability.

The invention provides a surface layer forming method by electric discharge machining which prevents cracking by dispersing discharge throughout the machining gap. The invention also reduces surface roughness and maintains constant machining characteristics for a longer time period, while simultaneously maintaining the machining stability and capability. According to the invention, a workpiece is machined in the machining gap formed between an electrode and the workpiece and surrounded with dielectric fluid mixed with metallic or submetallic powder, by supplying a discharge current that will not cause cracking during a single electric spark.

## BRIEF DESCRIPTION OF THE DRAWINGS

The accompanying drawings, which are incorporated in and constitute a part of the specification, illustrated presently preferred embodiments of the invention and, together with the general description given above and the detailed description of the preferred embodiments given below, serve to explain the principles of the invention. In the accompanying drawings:

Figs. 1(a) and 1(b) are schematic diagrams illustrating the arrangement of an apparatus for practicing an example of a method of forming a surface layer by an ordinary electric discharge machining;
Fig. 2 is a circuit diagram showing an embodiment for a high voltage superposing circuit for the present invention;
Fig. 3(a), 3(b) and 3(c) are graphical representations indicating the degrees of machining stability with discharge start voltages for the circuit of Fig. 2;
Fig. 4(a) is a relation between an auxiliary power supply current value and the surface roughness of the workpiece;
Fig. 4(b) is a current pulse applied to the electrode;
Fig; 5(a) shows a model RC-circuit that represents the RC characteristic of the embodiment of Fig. 2 of the present invention;

Fig. 5(b) shows the machining gap voltage response achieved by the RC-circuit in Fig. 5(a);

Figs. 6(a) and 6(b) indicate a relationship between a current limiting resistance of the auxiliary power supply and surface roughness according to the embodiment of Fig. 2 of the present invention;

Fig. 7 illustrates how cracking occurs in response to a single electric spark according to the invention;

Figs. 8(a) and 8(b) illustrate how cracking occurs in response to continuous electric sparks in accordance with the invention;

Figs. 9(a) and 9(b) indicate relationships between charging resistance and the depth and thickness of cracking;

Figs. 10(a) and 10(b) are photos of a machined surface showing the results of electric discharge machining under electrical conditions of medium degree according to the present invention;

Figs. 11(a) and 11(b) are photos of a machined surface showing the results of electric discharge machining using dielectric mixed with powder according to the present invention; and

Fig. 12 illustrates a high-voltage superposition circuit employed as a machining power supply according to the present invention.

## DESCRIPTION OF THE PREFERRED EMBODIMENTS

An embodiment of the present invention for carrying out the surface layer forming process of the invention will be described with reference to the drawings.

As is similar to the conventional apparatus shown in Figs. 1(a) and 1(b), the workpiece 5 and the electrode 4 are placed in the tank 6 to form the machining gap 7, and the machining is carried out with the machining solution 8 containing the mixture of silicon powders 9 in the machining gap 7.

Fig. 2 is a circuit diagram showing a high-voltage superposition circuit used as a machining power supply. The superposition circuit includes current limiting resistors R1 of approximately 10 to 20 Ω and R2 of approximately 100 to 300 Ω, a diode D, transistors TR1 and TR2 and a power source 10. The power source 10 is composed of a main power source 10a of approximately 80 V and an auxiliary power source 10b of approximately 100 to 400 V.

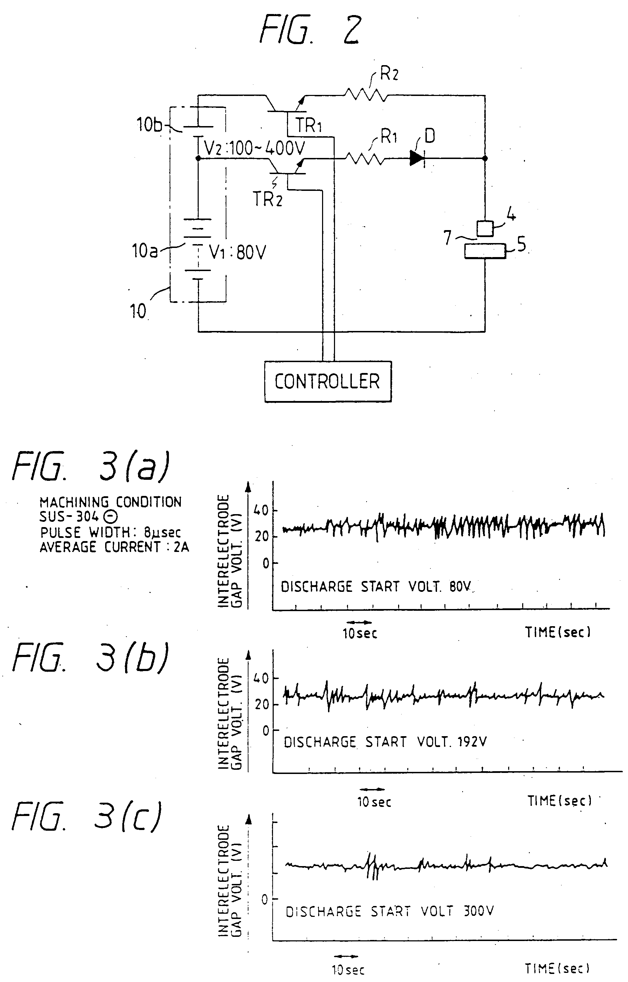

During machining, the auxiliary power supply 10b supplies a high voltage of 180 to 500 V to the machining gap 7. Particularly, during machina, transistor TR1 is switched on to force the auxiliary power supply 10b to supply a high voltage to the machining gap 7 to produce an electric spark. Transistor TR2 is then switched on to force the main power supply 10a to supply a discharge current which lasts for several micro-seconds ($\mu$sec). The duration of the discharge is determined by the limiting resistor R1. Since the applied voltage is high, the machining gap may be expanded while maintaining extremely stable machining. The results of experiments on machining stability by the application of a high voltage are shown in Figs. 3(a) to 3(c).

Figs. 3(a)-3(c) show the degrees of stability in electric discharge machining operations carried out with the voltage of the auxiliary power unit changed with the high voltage superposing circuit of Fig. 2.

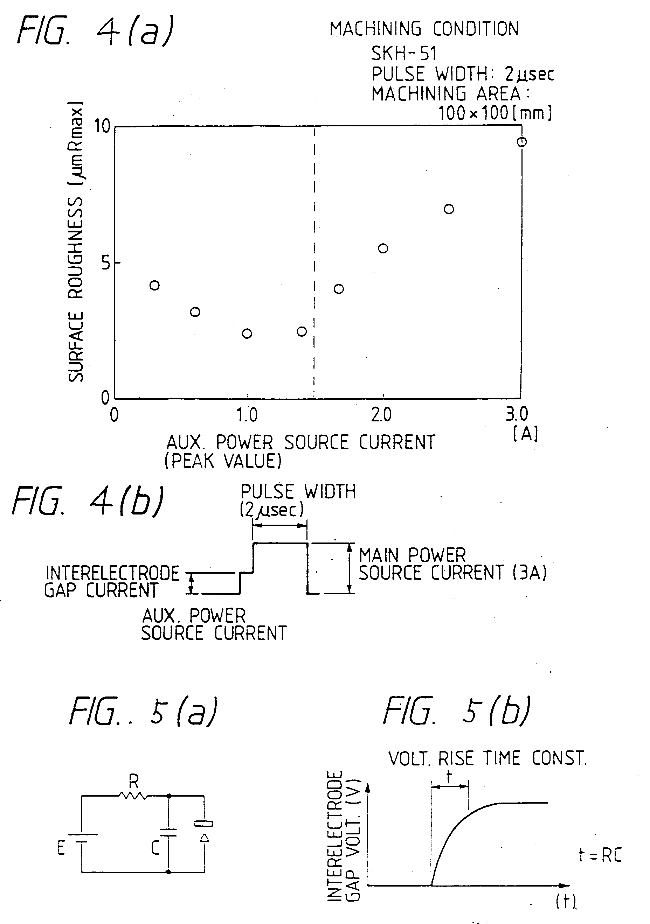

Fig. 4(a) shows a relationship between the current level provided by the auxiliary power supply 10b (Fig. 2) and the surface roughness after a large area has been finished with mixed powder. Fig. 4(a) illustrates that the surface roughness worsens as the current level increases above 1.5 A. However, the experiments have shown that the surface roughness also worsens when the current value is too small. The following machining and electrical conditions were used to obtain the experimental data illustrated in Fig. 4(a):

Machining conditions:

    (1) Electrode: Copper
    (2) Workpiece: High-speed steel (SKH-51)
    (3) Dielectric: Kerosene mixed with silicon particles at a ratio of 20 g/$\ell$
    (4) Electrical conditions:

| | |
|---|---|
| Current peak value: | Ip = 3 A |
| Pulse width: | $\tau$p = 2 $\mu$s |
| Stop width: | $\tau$s = 2 $\mu$s |
| Polarity: | Electrode (+) |

While a large area may be machined with low surface roughness when the mixed powder is used, as the machining area increases, the capacitance across the workpiece/electrode gap also increases. An increase in the capacitance between the electrode 4 and the workpiece 5 during machining of this large area influences the rate at which the voltage potential across the gap 7 increases (hereafter the "rise time").

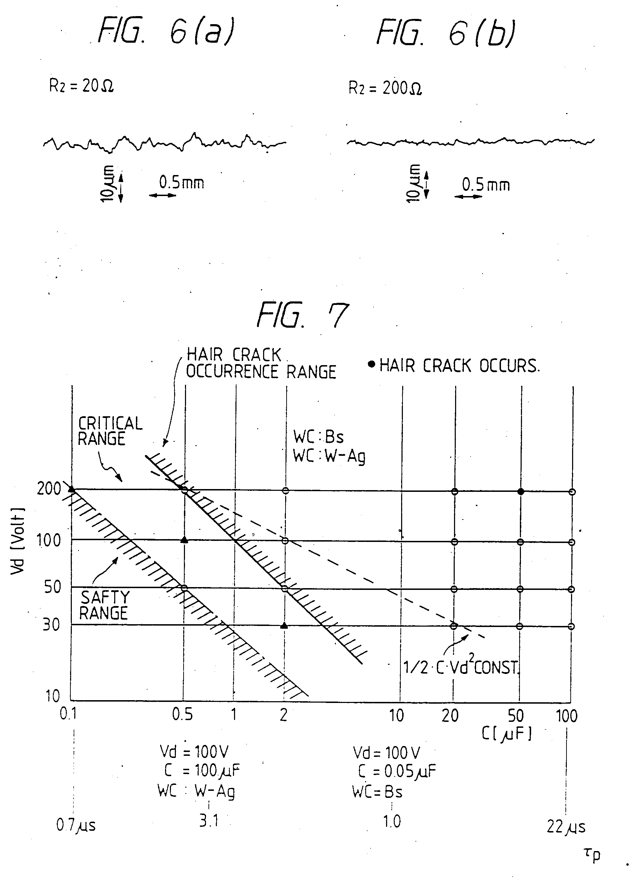

Fig. 5(a) illustrates a model RC-circuit which represents the RC characteristic exhibited by the workpiece 5 and electrode 4 in Fig. 2, across the machining gap 7. As shown in Fig. 5(b), the time constant t, corresponding to the RC characteristic of the machining gap 7, is t = RC . If a resistance value R is large, such as when the current of the auxiliary power supply 10b is too small, the voltage rise time t increases. In this state, the frequency with which discharges occur decreases and machining is not stabilized, even when the powder mixture is used, resulting in more surface roughness.

In consideration of the above, the experiments indicate that a current value of approximately 1.5 A is optimal. This represents the current value provided by the auxiliary power supply. A mirror surface of the lowest surface roughness is provided at the current value of approximately 1.5 A. To provide the optimum current value, the value of the limiting resistor R2 for the auxiliary power supply must be set to an appropriate value.

As described above, 100 to 400 V is adequate for the voltage of the auxiliary power supply 10b (Fig. 2) to keep machining stabilized. To set the current value to 1.5 A in this voltage range, the limiting resistor value R2 is maintained at R2 ≒ 100 to 300 Ω.

Fig. 6(a) shows the surface roughness at a time when R2 equals 20 Ω and Fig. 6(b) shows the surface roughness when R2 equals 200 Ω. Further it has been confirmed that the present invention extends the life of the powder material to approximately 500 hours, as compared to an ordinary life of 100 to 200 hours.

While the auxiliary power supply is used with the main power supply to superpose a high voltage in the above embodiment illustrated in Fig. 2, a similar effect can be produced in machining that does not use an auxiliary supply but still uses the mixed powder. This effect is achieved with mixed powder by using a main power supply that generates a high voltage of 200-500 V without using the auxiliary power supply. In this alternative embodiment, the current for the main power supply is limited by setting the current limiting resistor R1 at 100-300 Ω.

Another embodiment of the invention will now be described. However, prior to the description of this embodiment, the principal behind cracking will be described for single and continuous electric spark machining.

Materials having high resistance to high temperature (e.g., tungsten carbides inter-alloy WC-Co, conductive ceramics, or alloy tool steel SKD-11, SKD-51, SKH-51, etc.) are generally easily cracked during continuous electrode discharge machining. When an electric spark is emitted, the electrical condition that causes cracking may be seen. Specifically, during a single electric spark the discharge of energy is extremely large as shown in Fig. 7. A cracking range of tungsten carbide by a single spark is also shown in Fig. 7. The material must be finished under machining conditions that do not cause cracking.

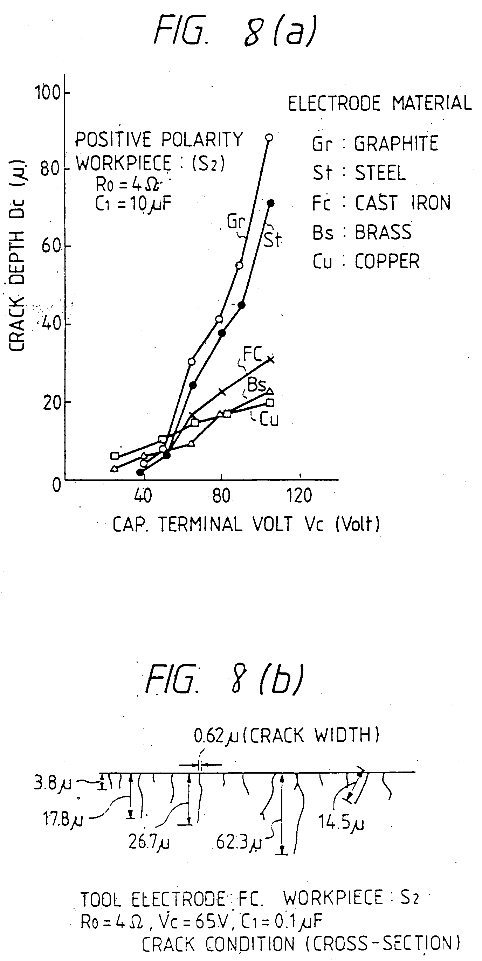

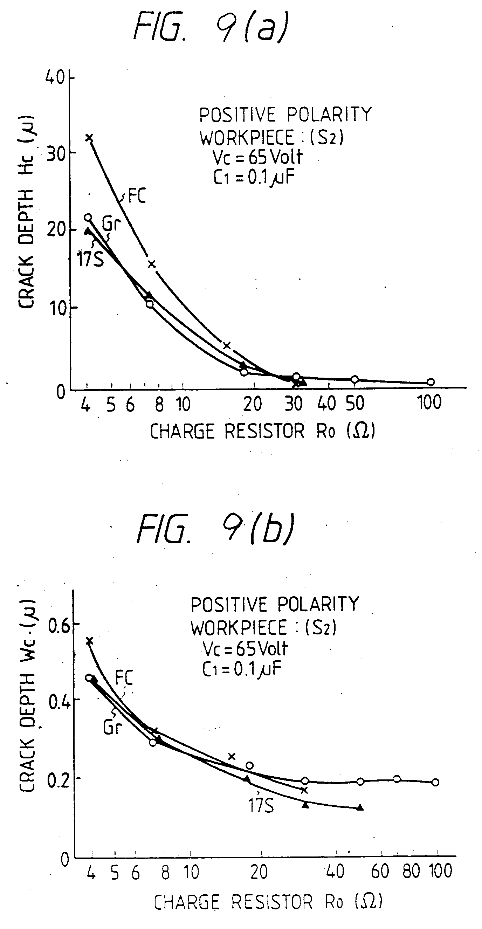

In continuous electron discharge machining, however, cracking occurs even when there is a much lower discharge energy. Specific examples are shown in Fig. 8(a), 8(b) and Fig. 9(a) and 9(b).

Further, while cracking does not occur with a single electric spark when the discharging voltage Vc equals 65 V and the capacitor capacity C equals 0.1 F (tungsten carbide), cracking does occur if continuous electric sparks are applied at this voltage and capacitance. Figs. 8(a) and 8(b) illustrate this cracking condition. It is understood that when charging resistance is large and the frequency of discharge occurrence is small, the depth and thickness of cracking are small. Further, as the charging resistance decreases and the frequency of discharge increases, the depth and thickness of cracking increases.

The above results make it clear that (1) even under a condition when cracking does not occur in a single electric spark, cracking can occur on a surface subjected to continuous electronic discharge machining; and (2) as the number of electric sparks increases, cracking occurs mote easily and in a deeper and thicker form.

This may be understood from the following relationship between charging resistance $R_0$ and the number of sparks f as illustrated in Figs. 9(a) and 9(b):

$$f = (k)/(C \cdot R_0)$$ ; where k = a coefficient of about 0.5 to 1. Thus as $R_0$ decreases, f increases.

It should be noted that cracking is made deeper and wider when the number of electric sparks increases. When the charging resistance is very large, the results are close to those of a single electric spark.

The depth and thickness of cracks increases when the number of discharges increases since, as more electric sparks are generated, the ion concentration in the machining gap increases. When the ion concentration increases, it causes continuous electric sparks in an area previously subjected to discharge or in the vicinity thereof, causing a so-called focused discharge. The focused discharge greatly increases the temperature in its vicinity. This higher temperature extends to the inner regions or depths of the electrode material by the discharge heat of multiple surfaces. After the focused discharge occurs the point of discharge moves to other locations on the material due to expansion of the machining gap distance. The surface of the portion that has been heated by the focused discharge is rapidly cooled by the dielectric. Since this portion is cooled from its outer surface toward the inner portion, the surface shrinks while its inner portion remains unshrunk and at the high temperature. Hence, tensile stress develops in the surface, causing cracking.

The centralized or focused discharges have a tendency similar to the provision of a single discharge spark generated by a long pulse width. Thus, in a single electric spark, large tensile stress does not develop in the workpiece surface when the discharge energy range is small and the pulse width is short, e.g., when the capacitance C is small. This lack of tensile stress is due to the fact that the electrode's and workpiece's outer surface are subjected to small energy discharges and thus, heat is not transmitted deeply into the workpiece body.

If the material is heated only on the surface, the cracking is negligibly small since the hot portion is instantly cooled before heating the workpiece's body. The temperature difference between the surface and inner portions is compensated for before any crack develops, and the stress difference is maintained small.

The following mathematical expression applies to the pulse width τp and the current ip developed by capacitor discharge:

$$\tau p \fallingdotseq \pi \sqrt{LC}$$

$$ip \fallingdotseq (Vd\text{-}Eg)\sqrt{(C/L)}$$

τp ≒ 0.7 μs, ip ≒ 15 A where C = 0.1 μF, L = 0.5 μH, Vd = 100 V and Eg = 25 V.

Thus, cracking may be prevented by avoiding focused discharges, which are avoided by using a discharge energy level small enough not to cause cracking in a single electric spark. The experiments have made it clear that two measures to avoid the centralized discharges are effective.

First, the invention increases the machining gap distance. This facilitates the circulation of the dielectric in the machining gap, in order to cool the discharge point and making deionization easier. By deionizing the dielectric, the invention ensures that the dielectric provides a uniform insulated layer between the electrode and workpiece. Re-establishing the insulated layer between the workpiece and electrode prevents centralized discharge. The application of a high voltage across a high impedance gap is effective to de-centralize discharge.

Moreover, increasing the concentration of the powder mixture and increasing the mixing effect can allow the machining gap distance to be increased. Thus, the machining gap distance can be further expanded by high-voltage superposition and concentrating the powder mixture.

Secondly, to facilitate the dispersion of discharge, the invention prevents any potential inclination in the machining gap to be focused on a given discharge mark. The invention prevents focusing by mixing a large amount of conductive or semiconductive (semiconductor) powder in the dielectric. Specifically, the dielectric is mixed with semiconductive or metallic powder such as Si powder (30 $\mu$m maximum), carbon powder (30 $\mu$m maximum) or Al powder (30 $\mu$m maximum or scaly).

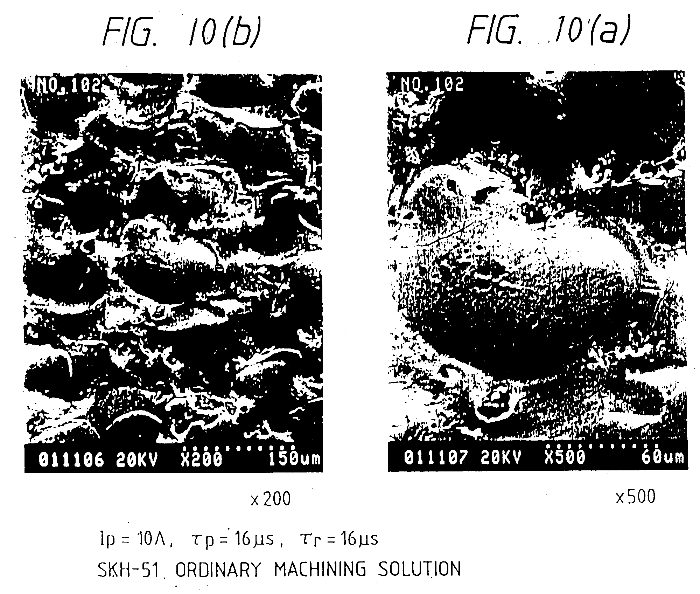

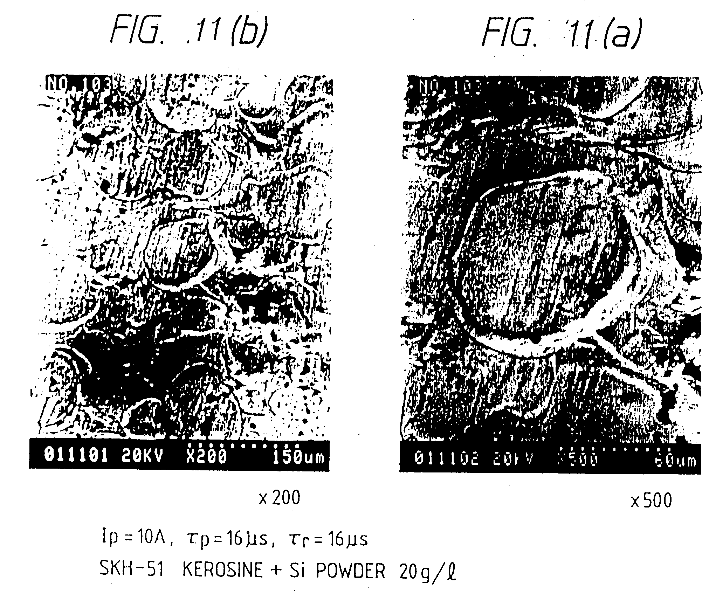

Figs. 10(a) and 10(b) show the results of ordinary electron discharge machining on high speed steel (SKH-51) performed under the electrical conditions of a medium machining degree. This medium machining degree would ordinarily never cause cracking in a single electric spark (lp = 10 A, $\tau$p = 16 $\mu$s, duty = 50%, i.e., $\tau$r = 16 $\mu$s). Figs. 11(a) and 11(b) show the results of machining under the identical electrical conditions with Si powder mixed at 20 g/$\ell$.

These figures indicate that while cracking has occurred in the ordinary dielectric, no cracking has developed in the material machined in the dielectric mixed with the Si powder. Proof that the Si powder mixing process does not cause cracking is provided by the fact that the material is not corroded at all after it is immersed in aqua regia or the like for 50 minutes. Any material that develops cracks is easily corroded. Tungsten carbide will not develop cracking when machined within the safe, single electric spark range illustrated in Fig. 7, if the powder, such as Si powder, is added to the dielectric.

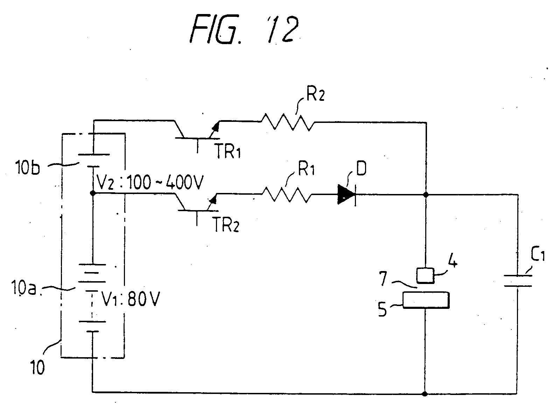

An alternative embodiment of the invention will now be described in reference to Figs. 1(a), 1(b) and 12.

In the system shown in Figs. 1(a) and 1(b), carries out machining, as explained above, in the machining gap 7 formed by the workpiece 5 and the electrode 4, wherein the gap is surrounded with the dielectric 8 mixed with the silicon powder 9.

However, in this alternative embodiment, a high-voltage superposition circuit (Fig. 12) is employed as a machining power supply. The superposition circuit includes current limiting resistors R1 and R2, a diode D, transistors TR1 and TR2, a capacitor C1, a main power supply 10a, and an auxiliary power supply 10b.

During machining, the auxiliary power supply 10b supplies a high voltage to the machining gap 7 when transistor TR1 is switched ON, in order to supply the high voltage to the machining gap 7 to generate discharges. Transistor TR2 is thereafter switched ON to cause the main power supply 10a to supply a discharge current of low energy. The superposition circuit of Fig. 12 reduces cracking by allowing the machining gap to be increased and by facilitating dispersion of the discharge.

A range in which cracking is not produced by single electron discharge machining varies according to the type of workpiece material. Fundamentally, materials having high resistance to high temperature, e.g., WC-Co and fine ceramics, are cracked by comparatively small amounts of energy. A typical example is shown in Fig. 7. For alloy tool steel, such as SKD-11, SKD-51 and SKH-51, cracking may occur at lp of 20 A or higher and $\tau$p of 40 $\mu$s or greater.

The present invention may be embodied in other specific forms without departing from the spirit and essential attributes thereof. In addition to the above-described silicon particles, other metal particles such as for instance tungsten carbide (WC) particles may be used. Furthermore, the particles of semi-metal material such as zirconium boride ($ZrB_2$), or the particles of carbonate material, or boride material, i.e., fine ceramic material may be used for formation of surface layers.

The machining solution is not always limited to mineral oil. That is, silicon oil or water (distilled water) may be employed as long as electric discharges will occur in it. The surface layer can be formed even on a ceramic material which is not electrically conductive. In this case, only the target surface of the ceramic material is made electrically conductive by electroless plating or spectacle reaction.

The surface layer may be formed by using a material which is not electrically conductive. In this case, the material is formed into particles as fine as possible, and the material particles thus formed are mixed with electrically conductive particles. The above-described operation is carried out by using the particles thus prepared. The non-conductive material can be alumina ($Al_2O_3$) for instance.

The same effects can be obtained according to the following method: Disposing particles of material, such as silicon for formation of a surface layer, between the electrode and the workpiece which are held in air, and inducing electric discharges therebetween.

In the above-described various embodiments of the invention, a key point is to dispose a sufficient number of material particles such as silicon particles for formation of a surface layer in the inter-electrode space. This makes the inter-electrode distance larger than the ordinary one, to allow the presence of the material particles such as silicon particles in an amount more than the amount of material removed from the workpiece per electric discharge near the discharge point.

As was described above, in the method of the invention, a material for formation of a surface layer on a workpiece is provided in the form of fine particles in the inter-electrode gap. Under this condition, electric discharges are induced therein. Therefore, the resultant surface layer is higher in corrosion resistance and in adhesion than what is formed with an ordinary discharge machining electrode. In the conventional high temperature nitriding method or CVD, the surface treatment is carried out at temperatures around 900°, and therefore the workpiece is liable to be strained or softened; and if the temperature is decreased, then the surface layer formed is liable to peel off. On the other hand, in the method of the invention, the workpiece will not be strained nor softened. Thus, the method of the invention may be suitably employed for surface treatment of a variety of workpieces.

According to another aspect of the invention, the material particles between the electrode and the workpiece are moved during electric discharge, which prevents the difficulty that the material particles such as silicon particles stick to one another, resulting in lowering the roughness of the surface layer formed on the workpiece.

## Claims

1. Method for forming a surface of a workpiece (5) comprising the steps

    a) supplying a pulsed main voltage to a machining gap (7) formed by said workpiece (5) and an electrode (4),

    b) superposing a high voltage on said pulsed main voltage to generate an electric spark discharge in said machining gap (7), and

    c) providing a dielectric mixture including a metallic or a submetalic powder in said machining gap (7),
    *characterized in that*

    d) a machining gap distance is increased to an extent that a circulation of said dielectric mixture in said machining gap (7) is facilitated,

    e) said pulsed main voltage is supplied through a main power source (10a), whereby a first limiting resistor (R1) is used to determine together with a capacitance of said machining gap (7) a discharge duration of said pulsed main voltage, and

    f) said high voltage between 100 V and 400 V is superposed by a high voltage superposition circuit (10b) to said pulsed main voltage, whereby a second limiting resistor (R2) in the range of 100 Ω to 300 Ω is used to maintain a pulse discharge current from said high voltage superposition circuit (10b) of essentially 1.5 A.

2. Method according to claim 1, characterized in that a submetalic powder of silicon, a semi-metal material, a carbonate material, or a boride material is added to said dielectric mixture.

3. Method according to claim 1, characterized in that a large amount of conductive or semiconductive powder like aluminum, silicon, or carbon having a grain size of 30 μm is added to said dielectric mixture.

4. Electric discharge machining apparatus for performing the method according to one of the preceeding claims 1 to 3, comprising

    a) an electrode (4),

    b) a tank (6) with a dielectric mixture (8) that includes a metallic or submatellic powder,

    c) a power source (10) with

        c1) a main power supply circuit (10a) for supplying a pulsed main voltage to a machining gap (7) formed between said electrode (4) and a workpiece (5), and
        c2) a high voltage superposition circuit (10b) for superposing a high voltage on said pulsed main voltage, and

    d) a first limiting resistor (R1) connected between said main power supply (10a) and said electrode (4) and a second limiting resistor (R2) connected between said high voltage superposition circuit (10b) and said electrode (4),
    *characterized in that*

    e) said limiting resistor (R1) has a resistance value between 10 to 20 Ω and determines together with a capacitance of said machining gap (7) a discharge duration of said pulsed main voltage, and

    f) said second limiting resistor (R2) has a resistance value between 100 Ω and 300 Ω and limits a current flow from said high voltage superposition circuit (10b) that supplies a high voltage between 100 V and 400 V to essentially 1.5 A.

5. Apparatus according to claim 4, characterized in that said discharge duration of said pulsed main voltage is several micro-seconds.

6. Apparatus according to claim 4, characterized in that

    a) a first transistor circuit (TR1) is connected in series with said second limiting resistor (R2) for turning said high voltage superposition circuit (10a) ON and OFF, and

b) a second transistor circuit (TR2) is connected in series with said first limiting resistor (R1) for turning the main power supply (10a) ON and OFF.

7. Apparatus according to claim 6, characterized in that it comprises a controller for turning ON and OFF said first transistor circuit (TR1) and said second transistor circuit (TR2).

**Patentansprüche**

1. Verfahen zum Formen einer Oberfläche eines Werkstücks (5), enthaltend die Schritte:

a) Zuführen einer gepulsten Hauptspannung zu einem Bearbeitungsspalt (7), der von dem Werkstück (5) und einer Elektrode (4) gebildet wird,

b) Überlagern einer Hochspannung zu der gepulsten Hauptspannung zum Erzeugen einer elektrischen Funkenentladung in dem Bearbeitungsspalt (7), und

c) Bereitstellen einer dielektrischen Mischung mit einem metallischen oder submetallischen Pulver in dem Bearbeitungsspalt (7), dadurch **gekennzeichnet,** daß

d) eine Bearbeitungsspaltdistanz in einem Umfang erhöht wird, daß eine Zirkulation der dielektrischen Mischung in dem Bearbeitungsspalt (7) erleichtert wird,

e) die gepulste Hauptspannung über eine Hauptspannungsversorgung (10a) zugeführt wird, und ein erster Begrenzungswiderstand (R1) benützt wird, um zusammen mit einer Kapazität des Bearbeitungsspalts (7) eine Entladungszeitdauer der gepulsten Hauptspannung zu bestimmen, und

f) die Hochspannung zwischen 100 V und 400 V durch eine Hochspannungs-Überlagerungsschaltung (10b) der gepulsten Hauptspannung überlagert wird, und ein zweiter Strombegrenzungswiderstand (R2) im Bereich von 100 Ω bis 300 Ω benützt wird, um einen gepulsten Entladungsstrom der Hochspannungs-Überlagerungsschaltung (10b) auf einen Wert von im wesentlichen 1,5 A zu halten.

2. Verfahren nach Anspruch 1, dadurch gekennzeichnet, daß zu der dielektrischen Mischung ein halbmetallisches Pulver aus Silizium, einem Semi-Metallmaterial, einem Karbonatmaterial oder einem Boridmaterial hinzugefügt wird.

3. Verfahren nach Anspruch 1, dadurch gekennzeichnet, daß der dielektrischen Mischung in einem großen Umfang ein leitendes oder halbleitendes Pulver wie Aluminium, Silizium oder Kohlenstoff mit einer Korngröße von 30 µm hinzugefügt wird.

4. Bearbeitungsgerät mit elektrischer Entladung zum Durchführen des Verfahrens nach einem der vorhergehenden Ansprüche 1 bis 3, enthaltend:

a) eine Elektrode (4),

b) einen Behälter (6) mit einer dielektrischen Mischung (8), die ein metallisches oder submetallisches Pulver enthält,

c) eine Stromversorgung (10) mit

c1) einer Hauptstromversorgungsschaltung (10a) zum Zuführen einer gepulsten Hauptspannung zu dem Bearbeitungsspalt (7), der zwischen der Elektrode (4) und einem Werkstück (5) gebildet ist, und

c2) eine Hochspannungs-Überlagerungsschaltung (10b) zum Überlagern einer Hochspannung zu der gepulsten Hauptspannung, und

d) einen ersten Begrenzungswiderstand (R1), der zwischen der Hauptstromversorgung (10a) und der Elektrode (4) angeschlossen ist, und einen zweiten Begrenzungswiderstand (R2), der zwischen der Hochspannungs-Überlagerungsschaltung (10b) und der Elektrode (4) angeschlossen ist, dadurch **gekennzeichnet,** daß

e) der Begrenzungswiderstand (R1) einen Widerstandswert zwischen 10 bis 20 Ω aufweist und zusammen mit einer Kapazität des Bearbeitungsspalts (7) eine Entladungsdauer der gepulsten Hauptspannung bestimmt, und

f) der zweite Begrenzungswiderstand (R2) einen Widerstandswert zwischen 100 Ω und 300 Ω aufweist und einen Stromfluß von der Hochspannungs-Überlagerungsschaltung (10b), die eine Hochspannung zwischen 100 V und 400 V zuführt, zu im wesentlichen 1,5 A begrenzt.

5. Gerät nach Anspruch 4, dadurch gekennzeichnet, daß die Entladungsdauer der gepulsten Hauptspannung mehrere Mikrosekunden beträgt.

**6.** Gerät nach Anspruch 4, dadurch gekennzeichnet, daß

> a) eine erste Transistorschaltung (TR1) in Serie mit dem zweiten Begrenzungswiderstand (R2) zum An- und Abschalten der Hochspannungs-Überlagerungsschaltung (10a) angeschlossen ist, und
>
> b) eine zweite Transistorschaltung (TR2) in Serie zu dem ersten Begrenzungswiderstand (R1) zum An- und Abschalten der Hauptstromversorgung (10a) angeschlossen ist.

**7.** Gerät nach Anspruch 6, dadurch gekennzeichnet, daß es einen Kontroller zum An- und Abschalten der ersten Transistorschaltung (TR1) und der zweiten Transistorschaltung (TR2) enthält.

## Revendications

**1.** Procédé pour façonner une surface d'une pièce (5), comprenant les étapes consistant à:

> a) fournir une tension principale pulsée dans un intervalle d'usinage (7) formé entre ladite pièce (5) et une électrode (4),
> b) superposer une haute tension à ladite tension principale pulsée, pour créer une décharge électrique par étincelles dans ledit intervalle d'usinage (7), et
> c) fournir un mélange diélectrique comprenant une poudre métallique ou semi-métallique dans ledit intervalle d'usinage (7),
> caractérisé en ce que
> d) on augmente un intervalle d'usinage de manière à faciliter une circulation dudit mélange diélectrique dans ledit intervalle d'usinage (7),
> e) on fournit ladite tension principale pulsée par l'intermédiaire d'une source principale d'énergie (10a), tandis qu'on utilise une première résistance de limitation (R1) pour déterminer, avec une capacitance dudit intervalle d'usinage (7), une durée de décharge de ladite tension principale pulsée, et
> f) on superpose, au moyen d'un circuit (10b) de superposition haute tension, ladite haute tension comprise entre 100 V et 400 V à ladite tension principale pulsée, tandis qu'on utilise une seconde résistance de limitation (R2) dans la plage de 100 Ω à 300 Ω pour maintenir un courant de décharge pulsé essentiellement de 1,5 A, dudit circuit (10b) de superposition haute tension.

**2.** Procédé selon la revendication 1, caractérisé en ce qu'une poudre semi-métallique de silicium, d'un matériau semi-métallique, d'un matériau de carbonate ou d'un matériau de borure est ajoutée audit mélange diélectrique.

**3.** Procédé selon la revendication 1, caractérisé en ce qu'une grande quantité de poudre conductrice ou semi-conductrice du type aluminium, silicium, ou carbone, présentant une taille de grains de 30 μm, est ajoutée audit mélange diélectrique.

**4.** Appareil d'usinage par électroérosion pour mettre en oeuvre le procédé selon l'une des revendications 1 à 3 qui précèdent, comprenant

> a) une électrode (4),
> b) un réservoir (6) contenant un mélange diélectrique (8) qui comprend une poudre métallique ou semi-métallique,
> c) une source d'énergie (10) avec
>
>> c1) un circuit principal (10a) d'alimentation en énergie, pour fournir une tension principale pulsée à un intervalle d'usinage (7) formé entre ladite électrode (4) et une pièce (5), et
>> C2) un circuit (10b) de superposition haute tension pour superposer une haute tension à ladite tension principale pulsée, et
>
> d) une première résistance de limitation (R1) connectée entre ladite alimentation principale en énergie (10a) et ladite électrode (4), et une seconde résistance de limitation (R2) connectée entre ledit circuit (10b) de superposition haute tension et ladite électrode (4),
> caractérisé en ce que
> e) ladite résistance de limitation (R1) présente une valeur de résistance comprise entre 10 et 20 Ω et détermine avec une capacitance dudit intervalle d'usinage (7) une durée de décharge de ladite tension principale pulsée, et
> f) ladite seconde résistance de limitation (R2) présente une valeur de résistance comprise entre 100 Ω et 300 Ω et de limitation à essentiellement 1,5 A un courant issu dudit circuit (10b) de superposition haute tension qui fournit une haute tension comprise entre 100 V et 400 V.

**5.** Appareil selon la revendication 4, caractérisé en ce que ladite durée de décharge de ladite tension principale pulsée est de plusieurs microsecondes.

**6.** Appareil selon la revendication 4, caractérisé en ce que

> a) un premier circuit à transistor (TR1) est connecté en série avec ladite seconde résistance de limitation (R2) pour activer ou désactiver ledit circuit (10a) de superposition haute tension, et

    b) un second circuit à transistor (TR2) est connecté en série avec ladite première résistance de limitation (R1), pour activer et désactiver l'alimentation principale (10a) en énergie.

7.   Appareil selon la revendication 6, caractérisé en ce qu'il comprend un élément de commande pour activer et désactiver ledit premier circuit à transistor (TR1) et ledit second circuit à transistor (TR2).

## FIG. 1(a)

## FIG. 1(b)

## FIG. 2

## FIG. 3(a)

MACHINING CONDITION
SUS-304 ⊖
PULSE WIDTH: 8μsec
AVERAGE CURRENT : 2A

DISCHARGE START VOLT. 80V

## FIG. 3(b)

DISCHARGE START VOLT. 192V

## FIG. 3(c)

DISCHARGE START VOLT 300V

12

## FIG. 4 (a)

MACHINING CONDITION
SKH-51
PULSE WIDTH: 2 μsec
MACHINING AREA:
100 × 100 [mm]

SURFACE ROUGHNESS [μm Rmax]

AUX. POWER SOURCE CURRENT
(PEAK VALUE)

## FIG. 4 (b)

PULSE WIDTH
(2 μsec)

MAIN POWER
SOURCE CURRENT (3A)

INTERELECTRODE
GAP CURRENT

AUX. POWER
SOURCE CURRENT

## FIG. 5 (a)

## FIG. 5 (b)

VOLT. RISE TIME CONST.

INTERELECTRODE
GAP VOLT. (V)

t = RC

(t)

## FIG. 6 (a)

$R_2 = 20\,\Omega$

10 μm   0.5 mm

## FIG. 6 (b)

$R_2 = 200\,\Omega$

10 μm   0.5 mm

## FIG. 7

HAIR CRACK
OCCURRENCE RANGE

● HAIR CRACK OCCURS.

CRITICAL RANGE

WC : Bs
WC : W–Ag

$V_d$ [Volt]

SAFTY RANGE

$1/2 \cdot C \cdot V_d^2\, \text{CONST}.$

$C$ [μF]

| Vd = 100V | Vd = 100 V |
| C = 100 μF | C = 0.05 μF |
| WC : W–Ag | WC = Bs |

0.7 μs          3.1          1.0          22 μs

$\tau_p$

## FIG. 8 (a)

POSITIVE POLARITY
WORKPIECE : (S2)
$R_0 = 4\,\Omega$
$C_1 = 10\,\mu F$

ELECTRODE MATERIAL

Gr : GRAPHITE
St : STEEL
Fc : CAST IRON
Bs : BRASS
Cu : COPPER

CRACK DEPTH $D_c$ ($\mu$)

CAP. TERMINAL VOLT $V_c$ (Volt)

## FIG. 8 (b)

0.62 $\mu$ (CRACK WIDTH)

3.8 $\mu$
17.8 $\mu$
26.7 $\mu$
62.3 $\mu$
14.5 $\mu$

TOOL ELECTRODE : FC. WORKPIECE : S2
$R_0 = 4\,\Omega$, $V_c = 65V$, $C_1 = 0.1\,\mu F$
CRACK CONDITION (CROSS-SECTION)

# FIG. 9(a)

POSITIVE POLARITY
WORKPIECE : (S2)
  Vc = 65 Volt
  C1 = 0.1 μF

# FIG. 9(b)

POSITIVE POLARITY
WORKPIECE : (S2)
  Vc = 65 Volt
  C1 = 0.1 μF

# FIG. 10(b)　　FIG. 10(a)

x200　　　　　　x500

$Ip = 10A$, $\tau p = 16\mu s$, $\tau r = 16\mu s$

SKH-51 ORDINARY MACHINING SOLUTION

EP 0 548 932 B1

## FIG. 11 (b)

x 200

## FIG. 11 (a)

x 500

$I_p = 10A$, $\tau_p = 16 \mu s$, $\tau_r = 16 \mu s$

SKH-51   KEROSINE + Si POWDER   20 g/$\ell$

FIG. 12